# EUROPÄISCHE PATENTSCHRIFT

(11) **EP 0 534 195 B1**
(45) Veröffentlichungstag und Bekanntmachung des Hinweises auf die Patenterteilung: **23.08.1995**
(21) Anmeldenummer: 92115129.6
(22) Anmeldetag: 04.09.1992
(51) Int. Cl.: B01J 8/02

(54) **Reaktor und Verfahren zur Durchführung heterogenkatalytischer Gasphasenreaktionen**
Reactor and process for carrying out heterogeneous catalytic reactions
Réacteur et procédé pour l'exécution des réactions à la catalyse hétérogène

(30) Priorität: 21.09.1991 DE 4131446
(43) Veröffentlichungstag der Anmeldung: 31.03.1993
(73) Patentinhaber: BASF Aktiengesellschaft, 67063 Ludwigshafen (DE)
(72) Erfinder: Ruppel, Wilhelm, Dr., W-6700 Ludwigshafen (DE); Thomas, Hans-Richard, Dr., W-6800 Mannheim 1 (DE); Boeck, Stefan, Dr., W-6700 Ludwigshafen (DE); Herzog, Klaus, Dr., W-6700 Ludwigshafen (DE); Resch, Peter, Dr., W-6800 Mannheim 1 (DE); Plueckhan, Juergen, Dr., W-6710 Frankenthal (DE); Mross, Wolf Dieter, Dr., W-6710 Frankenthal (DE)

(56) Entgegenhaltungen:
- GB-A- 2 046 618
- US-A- 2 363 738
- LINDE BERICHTE AUS TECHNIK UND WISSENSCHAFT Nr. 58, 1986, WIESBADEN DE Seiten 5 - 8 M.LEMBECK 'LINDE ISOTHERMREAKTOR F]R DIE METHANOLSYNTHESE'
- CHEMIE. INGENIEUR. TECHNIK Bd. 58, Nr. 3, 1986, WEINHEIM DE Seiten 212 - 215 U. Lahne &R. Lohmueller " Schuettschichtreaktor mit gewickelten Kuehlrohren, eine konstruktive neuentwicklung zur Durchfuehrung exothermerKatalytischer Prozesse"

## Beschreibung

Die vorliegende Erfindung betrifft einen Reaktor und ein Verfahren zur Durchführung heterogenkatalytischer Gasphasenreaktionen. Beispiele für solche heterogenkatalytischen Gasphasenreaktionen sind etwa die Herstellung von Ethylenoxid aus Ethylen und Sauerstoff, die Herstellung von Acrylsäure aus Acrolein und Sauerstoff, die Herstellung von Methylacrylsäure aus Methacrolein und Sauerstoff, die Herstellung von Styrol durch Dehydratisierung von Methylphenylcarbinol, die Herstellung von Methanol aus Synthesegas, die Methanisierung von Synthesegas, die Tieftemperaturkonvertierung, die Umsetzung von Wasser mit Olefinen zu Alkoholen, die Oxychlorierung von Olefinen oder Aromaten, oder die Herstellung von Methylaminen aus Methanol und Ammoniak. Die zitierten Beispiele stellen jedoch in keinster Weise eine vollständige Aufzählung aller mit dem erfindungsgemäßen Reaktor und Verfahren durchführbaren Umsetzungen dar.

Reaktortypen zur Durchführung heterogenkatalytischer Gasphasenreaktionen sind in großer Zahl bekannt. In der überwiegenden Mehrzahl aller technisch angewendeten heterogenkatalytischen Gasphasenreaktionen wird ein Geradrohrbündelreaktor verwendet. Solche Reaktoren sind seit langem Stand der Technik und werden von zahlreichen Firmen hergestellt und gewerblich vertrieben. Die anfallende Abwärme wird in Geradrohrbündelreaktoren durch ein geeignetes Kühlmedium, wie zum Beispiel Druckwasser oder hochsiedende Kohlenwasserstoffe, abgeführt und meist zur Dampfproduktion verwendet.

Diesem Verfahren, insbesondere dem dabei verwendeten Geradrohrbündelreaktor, sind einige Nachteile immanent. So muß die vom Gasgemisch durchlaufene Länge der Katalysatorschüttung und damit des Reaktors für einen befriedigenden Umsatz relativ groß, im Regelfall einige Meter sein. Dies führt zu hohen Kosten für die Gaskompression, da der Druckverlust über die Reaktorlänge üblicherweise erheblich ist. Ein weiterer Nachteil dieses Reaktortyps ist, daß die Kapazität solcher Rohrbündelreaktoren begrenzt ist. Die Reaktoren bestehen aus bis zu mehreren tausend einzelner Rohre, die in einem Reaktorkörper zusammengefaßt sind. Eine Erhöhung der Produktionsleistung eines solchen Reaktors ist nicht durch Vergrößerung des Durchmessers der einzelnen Rohre möglich, da in diesem Fall der mittlere Abstand der einzelnen Katalysatorpartikel von der gekühlten oder geheizten Rohrwandung größer wird. Dadurch wird die Kühlung schlechter, so daß einzelne, überhitzte, Katalysatorpartikel als Zündquelle für ein "Durchgehen" der Reaktion fungieren können. Durch die hohe, in einem solchen Fall freiwerdende Reaktionswärme wird der Katalysator in der Regel irreversibel geschädigt. Eine Erhöhung der Produktionsleistung eines Rohrbündelreaktors ist also nur durch Erhöhung der Rohranzahl bei geeignetem Durchmesser der Einzelrohre möglich. Auch dieses Vorgehen führt jedoch zu Problemen. Da sich, mit Ausnahme von salzbadgekühlten Reaktoren für Reaktionen bei Temperaturen über 300°C, die erforderliche Druckfestigkeit des Reaktorkörpers am hohen Druck des Kühlmittels und nicht am geringeren Druck des Reaktionsgasgemisches orientieren muß, sind diese Reaktoren sehr dickwandig, schwer, aufwendig gefertigt und damit auch teuer und nur noch unter sehr großen Schwierigkeiten transportierbar. Die heutzutage realisierten Baugrößen erreichen bereits die Grenze des wirtschaftlich sinnvollen. Ein weiterer großer Nachteil dieser Bauart ist, daß das Geradrohrbündel sehr anfällig gegen Wärmespannungen ist, die durch Temperaturdifferenzen zwischen Reaktordruckbehälterwand und Reaktionsrohrwand hervorgerufen werden. Hierdurch besteht die Gefahr, daß bei unsachgemäßer Bedienung oder gravierenden Betriebsstörungen Reaktionsrohre knicken oder ausreißen oder daß die Reaktordruckbehälterwand aufreißt.

Ein prinzipiell anderer Reaktortyp zur Durchführung heterogenkatalytischer Gasphasenreaktionen beruht auf der Anwendung einer losen Katalysatorschüttung mit eingebettetem Wärmetauscher oder, im Falle exothermer Reaktionen, einer anderen geeigneten Art der Wärmeabfuhr. Auch hier ist der Stand der Technik groß und in zahlreichen Schriften niedergelegt. So beansprucht etwa US-A-2 744 813 einen Reaktor mit loser Katalysatorschüttung, geraden Kühlrohren und axialem Gasstrom, EP-B 1 82 609 (ICI) einen ähnlichen Reaktor mit radialem Gasstrom. Reaktoren mit geraden Kühlrohren in einer losen Katalysatorschüttung benötigen jedoch ebene Rohrböden und leiden damit an denselben Problemen wie ein konventioneller Geradrohrbündelreaktor. Darüber hinaus gestaltet sich das Einfüllen und Entleeren des Katalysators wesentlich schwieriger. Eine andere Bauart von Reaktoren mit loser Katalysatorschüttung und eingebettetem Wärmetauscher verwendet einen Wärmetauscher aus Lagen gewickelter Rohre (DE 34 14 717 (Linde), DE 28 48 014 (Linde), DE 39 35 030 (Linde)). Bei der DE-A 34 14 717 erfolgt die Durchströmung des Reaktors in axialer Richtung. Mit gewickelten Rohren entfällt die Notwendigkeit von ebenen Rohrböden und Probleme mit Thermospannungen sind infolge der Elastizität der Rohrwickel praktisch nicht gegeben. Die Rohre werden in dieser Bauart quer angeströmt, durch die besondere Geometrie der Rohranordnung ist die Gasvermischung und damit der konvektive Wärmetransport stark erhöht. Darüber hinaus ist der mittlere Abstand eines Katalysatorkorns von der nächsten Wärmeaustauschfläche geringer als in vergleichbaren Geradrohrbündelreaktoren. Beide Effekte führen zu einer deutlichen Senkung der benötigten Wärmeaustauschfläche gegenüber Geradrohrbündelreaktoren desselben Katalysatorvolumens auf etwa die Hälfte. Die spezifische Wärmeaustauschfläche kann des weiteren an den Reaktionsfortschritt angepaßt werden oder die Temperatur des in den Rohren strömenden Kühlmittels kann variiert werden (EP 339 748 A2 (Shell)). Eine weitere Wärmeübertragungsmöglichkeit besteht im Zumischen von Reaktanden oder Inertgasen längs der Katalysatorschüttung (DE 28 48 014, DE 39 35 030) oder, bei exothermen Reaktionen, im Durchleiten eines kalten Reaktoreingangsgases durch die Katalysatorschüttung (US-A 1 835 827 (Du Pont)).

Eine bei praktisch jeder heterogenkatalytischen Gasphasenreaktion zu beobachtende Erscheinung ist, daß das Wertprodukt der Reaktion durch Kontakt mit dem zu seiner Synthese verwendeten Katalysator oder unter den im Katalysatorbett herrschenden Reaktionsbedingungen zumindest teilweise wieder zersetzt wird, so daß ein Teil des im vorderen Teil der Katalysatorschüttung gebildeten Produkts im hinteren Teil wieder vernichtet wird. Wie jetzt gefunden wurde, ist im Gegensatz zur vorherrschenden Meinung dieser Verweilzeiteffekt für die Ausbeute bedeutender als etwa eine mäßige Temperaturerhöhung. Bei exothermer Zersetzung des Wertprodukts, etwa der Weiteroxidation des Produkts einer Selektivoxidation mit Sauerstoff zu Kohlendioxid, kann durch ein Durchgehen der Reaktion unter exzessiver Wärmeentwicklung der Katalysator irreversibel geschädigt werden. Bei anderen Reaktionen kann der Katalysator durch Zersetzung des Wertprodukts unter Koksabscheidung passiviert werden. Ein anderer, störender Einfluß von im Reaktionsgasgemisch vorhandenem Wertprodukt kann die Inhibierung der gewünschten Reaktion durch das Wertprodukt sein. In jedem der aufgezeigten Fälle ist es von Vorteil, das Wertprodukt so rasch wie möglich aus dem Katalysatorbett zu entfernen.

Eine offensichtliche Verfahrensweise, das oben aufgezeigte Problem der Zersetzung des Wertprodukts beim Durchgang durch die Katalysatorschüttung zu mildern, ist, die vom Reaktionsgasgemisch durchlaufene Katalysatorstrecke so kurz wie möglich zu halten. Der Umsatz an Einsatzstoffen zum Wertprodukt sinkt dadurch jedoch, was zumeist durch Temperaturerhöhung kompensiert werden kann, wenn diese Temperaturerhöhung keine negativen Auswirkungen auf das Reaktionsgeschehen hat. Darüber hinaus können durch eine Verkürzung der Katalysatorschüttung der Druckverlust über den Reaktor und damit die Kompressionskosten verringert werden, oder, alternativ, die Produktionsleistung des Reaktors kann durch Vergrößerung der pro Zeiteinheit durch den Katalysator gleiten Reaktionsgasmenge erhöht werden. Bei Prozessen, die nach dem Prinzip der Kreisgasfahrweise mit einer kontinuierlichen Ausschleusung von Produkten arbeiten, kann der Druckverlust durch eine Verkürzung der Katalysatorschicht sogar soweit minimiert werden, daß eine solche Erhöhung der durch die Katalysatorschüttung geleiteten Reaktionsgasmenge möglich ist, daß bei konstanter Produktion an Wertprodukt der Umsatzgrad pro Reaktordurchgang verringert werden kann. Dies bringt üblicherweise den zusätzlichen Vorteil einer verbesserten Selektivität, so daß für eine konstant gehaltene Produktion weniger Edukt eingesetzt werden muß als bei herkömmlicher Betriebsweise. Allerdings muß bei erhöhtem Gasdurchsatz und verringertem Umsatzgrad gesichert sein, daß das Aufarbeitungs- und Reinigungssystem die anfallenden Gasmengen bewältigen kann. Die Optimierung von Reaktoren und Prozessen in dem hier skizzierten Parameterfeld ist die übliche Aufgabe eines Fachmanns auf diesem Gebiet.

Aufgabe der vorliegenden Erfindung ist es, ein verbessertes Verfahren zur Durchführung heterogenkatalytischer Gasphasenreaktionen sowie einen Reaktor zur Durchführung der Reaktionen aufzufinden.

Verbesserte Verfahren zur Durchführung solcher Reaktionen, wie etwa der Herstellung von Ethylenoxid aus Ethylen und Sauerstoff, der Herstellung von Acrylsäure aus Acrolein und Sauerstoff, der Herstellung von Methacrylsäure aus Methacrolein und Sauerstoff, der Herstellung von Styrol durch Dehydratisierung von Methylphenylcarbinol, der Herstellung von Methanol aus Synthesegas, der Methanisierung von Synthesegas, der Tieftemperaturkonvertierung, der Umsetzung von Wasser mit Olefinen zu Alkoholen, der Oxychlorierung von Olefinen oder Aromaten oder der Herstellung von Methylaminen aus Methanol und Ammoniak besitzen große wirtschaftliche Bedeutung.

Diese Aufgabe wird durch die kennzeichnenden Merkmale des Anspruchs 1 gelöst.

In den Ansprüchen 2 - 21 sind Verfahren zur Herstellung von Wertprodukten mittels des aufgezeigten erfindungsgemäßen Reaktors und Verfahrens aufgezeigt.

Besonders vorteilhaft läßt sich eine Verkürzung der vom Reaktionsgasgemisch zu durchlaufenden Katalysatorschüttung dadurch erreichen, daß das Reaktionsgasgemisch nicht durch verkürzte katalysatorgefüllte Rohre eines Reaktors herkömmlichen Typs strömt, sondern daß eine lose Katalysatorschüttung angewendet wird, die von der Reaktionsgasmischung nicht in axialer, sondern in radialer Richtung durchströmt wird. Die Strömungsrichtung kann dabei zentrifugal oder zentripetal sein, wobei die zentripetale Richtung ganz besonders vorteilhaft ist, da die Strömungsgeschwindigkeit des Gases in diesem Fall vom Eintritt in den Reaktor zum Austritt aus dem Reaktor kontinuierlich zunimmt. Die Verweilzeit des Reaktionsgasgemisches in einer bestimmten Schichtdicke der Katalysatorschüttung sinkt folglich mit dem Reaktionsfortschritt. Dadurch wird bereits gebildetes Wertprodukt beschleunigt aus dem Katalysatorbett entfernt und eventuellen ausbeutevermindernden Nachreaktionen entzogen. Der Fall einer zentrifugalen Strömung des Reaktionsgasgemisches kann unter besonderen Umständen allerdings Vorteile über den einer zentripetalen Strömung aufweisen, insbesondere bei stark volumenvergrößernden Reaktionen. Bei solchen Reaktionen kann durch eine geeignete Dimensionierung des Reaktors oder durch andere Maßnahmen, etwa dem Einbau von Verdrängerkörpern am äußeren Rand des Reaktors, auch bei zentrifugalem Strom eine Verweilzeitoptimierung durchgeführt werden.

Der ganz besondere Vorteil des erfindungsgemäßen Reaktors und Verfahrens in seiner im Normalfall bevorzugten Ausführungsform ist jedoch die beschleunigte Abführung des Wertprodukts aus dem Katalysatorbett bei zentripetalem Gasstrom. Den negativen Effekten zu großer Verweildauer des Wertprodukts im Katalysatorbett, zum Beispiel Ausbeuteverlust durch seine Zersetzung unter möglicher Beschädigung des Katalysators, etwa durch Übertemperaturen bei Totaloxidation des Wertprodukts einer Selektivoxidation mit Sauerstoff oder Verkokung des Katalysators, wird mit dem erfindungsgemäßen Reaktor und Verfahren genauso effektiv begegnet wie der Passivierung des Katalysators durch gebildetes Wertprodukt. Wie bereits oben erwähnt wurde, ist der Effekt einer zu langen Verweilzeit auf die Ausbeute an Wertprodukten bedeutender als der Effekt erhöhter Reaktionstemperatur. Dadurch ist es möglich, bei unbefriedigendem Umsatzgrad die Reaktionstemperatur durch wärmetechnische Maßnahmen mit dem Reaktionsfortschritt anzuheben und so den Umsatz zu vervollständigen.

Ein Ausführungsbeispiel der Erfindung mit den wesentlichen erfinderischen Merkmalen ist in der Zeichnung dargestellt und wird im folgenden näher beschrieben.

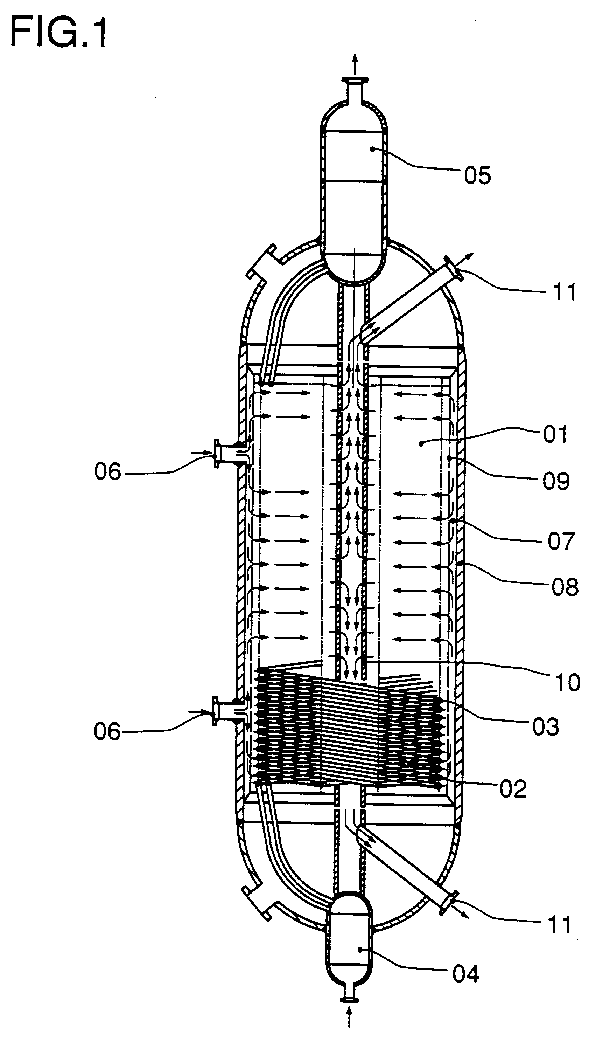

- Figur 1: zeigt einen Querschnitt durch den erfindungsgemäßen Reaktor,

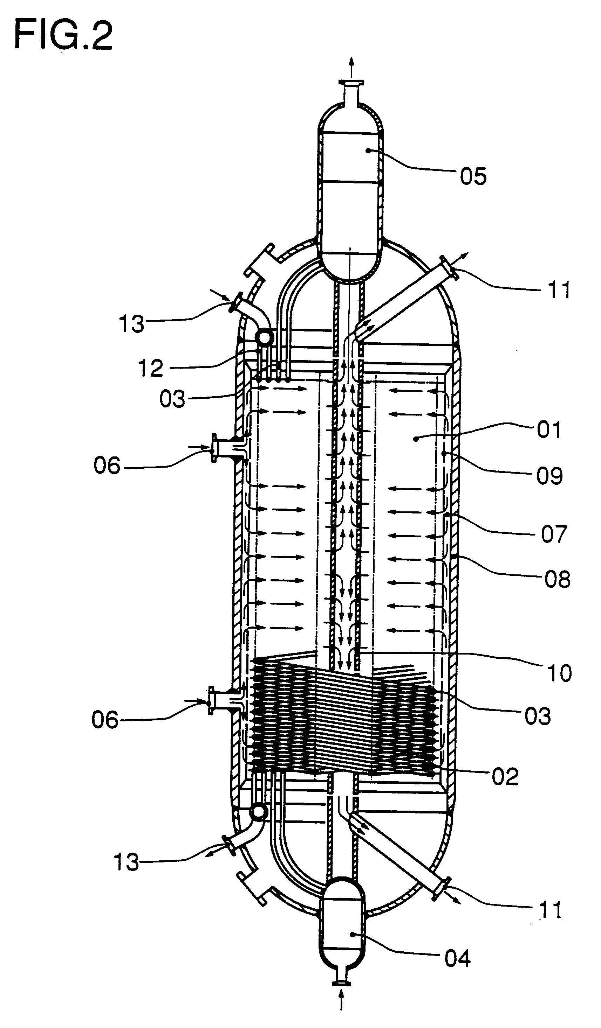

- Figur 2: zeigt einen Querschnitt durch den erfindungsgemäßen Reaktor mit zusätzlich regelbarem Heizkreisumlauf.

Es ist unbedingt erforderlich, die entstehende Reaktionswärme abzuführen. Hier ist der Einsatz eines Radialstromreaktors besonders vorteilhaft, bei dem in die Katalysatorschüttung (01) ein Rohrbündelwärmetauscher (02) mit gewickelten Kühlrohren (03) eingebaut ist. In diesen strömt ein geeignetes Wärmeträgermedium, zum Beispiel Druckwasser oder Kerosin. In einer möglichen und vorteilhaften Bauform besteht das Rohrbündel aus mehreren konzentrischen Rohrlagen, die vom Halbkugelboden des Verteilers (04) ausgehen und am ebenfalls halbkugelförmigen Boden des Sammlers (05) wieder zusammengeführt werden. Anzahl, Abstand in horizontaler und vertikaler Richtung sowie Größe und Richtung der Steigung der einzelnen Wicklungen können variiert und damit den wärmetechnischen Erfordernissen und der Größe der Katalysatorpartikel angepaßt werden. Bei zentripetaler Durchströmung der Katalysatorschüttung tritt das Reaktionsgemisch über mehrere Stutzen (06) in den außenliegenden konzentrischen Verteilerringraum (07) des Reaktors, der von der Druckbehälterwand (08) und einem mit dieser verbundenen umlaufenden Hemd (09) gebildet wird.

Dieses Hemd trennt den Ringraum von der Katalysatorschüttung. Das Reaktionsgasgemisch verteilt sich und gelangt durch Bohrungen in die Katalysatorschüttung Diese durchströmt es in radialer Richtung bis hin zu dem innenliegenden Sammelrohr (10), das ebenfalls Durchtrittsöffnungen besitzt. Von hier wird das Produktionsgasgemisch über Austrittsstutzen (11) aus dem Reaktor herausgeführt. Soll eine umgekehrte Strömungsrichtung realisiert werden, so ist dies mit dem gleichen Konstruktionsaufbau möglich.

Ebenso ist eine Bauform möglich, bei der ein Teil des erwärmten Kühlmediums (zum Beispiel in Form von Wasserdampf) zum Aufheizen kalten Reaktoreingangsgases verwendet wird. Hierzu können eine oder mehrere der konzentrischen Wicklungen (12) vom Kühlkreislauf - gewickelte Kühlrohre (03) - abgekoppelt und zu einem von rückgeführtem, aufgeheizten Kühlmedium durchströmen Heizkreislauf zusammengeführt werden (13). Dies ist bei zentripetaler, aber auch bei entsprechender Anordnung der abgekoppelten Wicklungen bei zentrifugaler Strömungsrichtung möglich.

Der Reaktor mit einem Wärmetauscher mit gewickelten Rohren besitzt deutlich bessere wärmetechnische Eigenschaften als die herkömmliche Bauart mit längsdurchströmten Geradrohrbündel. Damit ergibt sich als Vorteil, daß der Reaktor bei gleicher Produktionsleistung deutlich kompakter gebaut werden kann und Abmaße, Gewicht und Investitionskosten wesentlich verringert werden. Als weiterer Vorteil ist zu nennen, daß mit diesem Bautyp eine Erhöhung der Produktionsleistung durch Vergrößerung des Reaktors möglich ist, während mit den heutzutage realisierten Baugrößen bei Geradrohrbündeln die Grenze des wirtschaftlich sinnvollen erreicht ist. Schließlich ist der konstruktive Aufbau mit gewickeltem Rohrbündel vorteilhafter hinsichtlich auftretender Wärmespannungen, die durch Temperaturdifferenzen zwischen Reaktionsgasgemisch und Kühlmedium, also zwischen Reaktordruckbehälterwand und Kühlrohrwand hervorgerufen werden. Durch das elastische Federverhalten der gewickelten Rohre können große Temperaturdifferenzen ertragen werden, ohne mechanische Spannungen hervorzurufen, was für den Normalbetrieb, aber vor allem für die sichere Beherrschung von Betriebsstörungen vorteilhaft ist. Dem erfindungsgemäßen Reaktor und Verfahren ist also zusätzlich eine nicht unerhebliche Erhöhung der Betriebssicherheit gegenüber dem Stand der Technik zu eigen.

Eine weitere Möglichkeit zur Abführung der bei exothermen Reaktionen anfallenden Reaktionswärme im erfindungsgemäßen Reaktor und Verfahren besteht in ihrer direkten Verwendung zum Aufheizen des kalten Reaktionsgasgemisches durch das Verfahren der sogenannten Frischgaseinspeisung. Die Anzahl und die Lage der Frischgasaustrittsstellen in der Katalysatorschüttung kann dabei je nach der am gegebenen Ort in der Katalysatorschüttung entstehenden und abzuführenden Wärmemenge unterschiedlich sein. Durch dieses Verfahren wird die durch aktive Kühlung oder über einen separaten Wärmetauscher aus dem Reaktor abzuführende Wärmemenge verringert. Die für eine aktive Kühlung notwendigen technischen Einrichtungen oder ein separater Wärmetauscher können daher kleiner dimensioniert werden und die bei ihrer Herstellung und Montage anfallenden Kosten sind geringer.

Ebenso bei exothermen Reaktionen anwendbar ist eine Kombination der vorstehend beschriebenen Kühlmethoden, die in einem Reaktor mit radialer Strömung des Reaktionsgasgemisches durch das Katalysatorbett eingesetzt wird. Wärme, die nicht durch das Einleiten kalten Reaktoreingangsgases verbraucht wird, wird dabei durch ein in gewickelten Rohren durch das Katalysatorbett strömendes Kühlmedium abgeführt.

Das erfindungsgemäße Verfahren zur Durchführung einer heterogenkatalytischen Gasphasenreaktion kann sowohl in Kreisgasfahrweise als auch mit einmaligem Durchtritt der Reaktionsgasmischung durch das Katalysatorbett durchgeführt werden. In der Kreisgasfahrweise wird das Reaktionsgasgemisch im Kreislauf durch den katalysatorgefüllten Reaktor geschickt, gebildete Produkte sowie entstandene Nebenprodukte und Stoffe, die sich im Kreisgas ansonsten anreichern würden, werden durch geeignete Maßnahmen aus dem Kreislauf entfernt und die entsprechenden Mengen an Einsatzstoffen sowie gegebenenfalls Reaktionsmodifiziermitteln dem Gasgemisch vor erneutem Durchgang durch den Reaktor zugemischt. Bei der Ausführungsform mit einmaligem Gasdurchtritt durch den Reaktor wird das gesamte Gasgemisch nach dem Reaktor aufgearbeitet.

Genauso ist es mit dem erfindungsgemäßen Reaktor und Verfahren möglich, endotherme Reaktionen durchzuführen. In den Rohren des Wärmetauschers strömt dann ein Heizmedium, die oben beschrieben vorteilhaften wärmetechnischen Eigenschaften des erfindungsgemäßen Reaktors gelten für einen Wärmestrom in umgekehrter Richtung, wie er bei endothermen Reaktionen benötigt wird, ebenso wie für exotherme Reaktionen.

## Patentansprüche

1. Reaktor zur Durchführung heterogenkatalytischer Gasphasenreaktionen, bei welchem die entstehende Reaktionswärme mittels eines in die Katalysatorschüttung eingebauten Rohrbündelwärmetauschers, welcher aus einem oder mehreren gewickelten Rohren besteht und der von einem Kühlmedium durchströmt wird, abgeführt wird, dadurch gekennzeichnet, daß eine Reaktionsgasmischung radial zur Längsachse des Reaktors und vorzugsweise zentripetal durch das Katalysatorbett geführt wird.

2. Verfahren zur Durchführung heterogenkatalytischer Gasphasenreaktionen unter Verwendung eines Reaktors nach Anspruch 1.

3. Verfahren nach Anspruch 2, dadurch gekennzeichnet, daß bei zentripetaler Strömungsrichtung die in den Reaktor eingeleiteten Reaktionsgase beziehungsweise bei zentrifugaler Strömungsrichtung die aus der Katalysatorschüttung austretenden Reaktionsgase in einem um die Katalysatorschüttung angeordneten Verteilerringraum gelangen, der von der Druckbehälterwand und einem mit dieser verbundenen, umlaufenden Hemd gebildet wird, das mit Durchlaßöffnungen versehen ist.

4. Verfahren nach Anspruch 2, dadurch gekennzeichnet, daß bei zentripetaler Strömungsrichtung die aus der Katalysatorschüttung austretenden Reaktionsgase beziehungsweise bei zentrifugaler Strömungsrichtung die in den Reaktor eingeleiteten Reaktionsgase in ein konzentrisch zur Längsachse angeordnetes, innenliegendes Sammelrohr gelangen, das mit Durchlaßöffnungen versehen ist und über Stutzenleitungen von außerhalb des Reaktors angefahren werden kann.

5. Verfahren nach Anspruch 2, dadurch gekennzeichnet, daß die freiwerdende Reaktionswärme durch Einleiten kalter Reaktionsgase in den Reaktor nach dem Prinzip der Kaltgasquenchung verbraucht wird.

6. Verfahren nach den Ansprüchen 3 oder 4, dadurch gekennzeichnet, daß die entstehende Reaktionswärme durch Einleiten kalter Reaktionsgase in den Reaktor nach dem Prinzip der Kaltgasquenchung verbraucht wird.

7. Verfahren nach den Ansprüchen 2 bis 4 und 5, dadurch gekennzeichnet, daß man ein Bündel von mehreren konzentrisch gewikkelten Kühlrohren, welche in Lagen angeordnet werden, verwendet, wobei die Schraubenrichtung benachbarter Bündel wechseln kann und die Steigung der Rohrwicklung und/oder vertikaler und horizontaler Abstand benachbarter Rohrwicklungen variieren kann und den wärmetechnischen Erfordernissen angepaßt werden kann.

8. Verfahren nach den Ansprüchen 2 bis 4, 5 und 7 wobei man bei zentripetaler Strömung des Reaktionsgasgemisches die Steigung der Rohrwicklungen und/oder den Abstand benachbarter Rohrwicklungen in der Nähe der äußeren Begrenzung der Katalysatorschüttung verringert.

9. Verfahren nach den Ansprüchen 2 bis 4, 5 und 7, wobei man bei zentrifugaler Strömung des Reaktionsgasgemisches die Steigung der Rohrwicklungen und/oder den Abstand benachbarter Rohrwicklungen in der Nähe der inneren Begrenzung der Katalysatorschüttung verringert.

10. Verfahren nach den Ansprüchen 2 bis 4, 5 bis 9, dadurch gekennzeichnet, daß kalte Reaktionsgasgemisch, durch rückgeführtes aufgeheiztes Kühlmedium erwärmt wird, das bei zentripetaler Strömungsrichtung ein oder mehrere außenliegende, bei zentrifugaler Strömungsrichtung ein oder mehrere innenliegende Rohrwicklungen durchströmt, die vom Kühlrohrbündel abgekoppelt sind.

11. Verfahren nach den Ansprüchen 2 bis 10, dadurch gekennzeichnet, daß das zur Synthese verwendete Reaktionsgasgemisch in einem Kreislauf durch den Reaktor geführt wird, wobei nach dem Durchgang durch den Reaktor entstandene Wertprodukte und Nebenprodukte der Reaktion sowie eventuell sich ansonsten im Kreisgas anreichernde Stoffe durch geeignete Maßnahmen aus dem Kreislauf entfernt werden und dem Gasgemisch anschließend, vor dem erneuten Durchgang durch den Reaktor wieder Einsatzstoffe sowie gegebenenfalls Reaktionsmodifiziermittel durch geeignete Maßnahmen zugeführt werden.

12. Verfahren nach den Ansprüchen 2 bis 11 zur Herstellung von Ethylenoxid aus Ethylen und Sauerstoff.

13. Verfahren nach den Ansprüchen 2 bis 11 zur Herstellung von Acrylsäure aus Acrolein und Sauerstoff.

14. Verfahren nach den Ansprüchen 2 bis 11 zur Herstellung von Methacrylsäure aus Methacrolein und Sauerstoff.

15. Verfahren nach den Ansprüchen 2 bis 11 zur Herstellung von Styrol durch Dehydratisierung von Methylphenylcarbinol.

16. Verfahren nach den Ansprüchen 2 bis 11 zur Herstellung von Methanol aus Synthesegas.

17. Verfahren nach den Ansprüchen 2 bis 11 zur Methanisierung von Synthesegas.

18. Verfahren nach den Ansprüchen 2 bis 11 zur Tieftemperaturkonvertierung.

19. Verfahren nach den Ansprüchen 2 bis 11 zur Umsetzung von Wasser mit Olefinen zu Alkoholen.

20. Verfahren nach den Ansprüchen 2 bis 11 zur Oxychlorierung von Olefinen oder Aromaten.

21. Verfahren nach den Ansprüchen 2 bis 11 zur Herstellung von Methylaminen aus Methanol und Ammoniak.

## Claims

1. A reactor for carrying out heterogeneously catalyzed gas-phase reactions, in which the heat of reaction produced is removed by means of a tube bundle heat exchanger installed in the catalyst bed that comprises one or more coiled tubes and has a cooling medium flowing through it, wherein a reaction gas mixture is passed, preferably centripetally, to the longitudinal axis of the reactor, through the catalyst bed.

2. A process for carrying out heterogeneously catalyzed gas-phase reactions using a reactor as claimed in claim 1.

3. A process as claimed in claim 2, wherein the reaction gases fed into the reactor in the case of a centripetal flow direction or the reaction gases leaving the catalyst bed in the case of a centrifugal flow direction pass into an annular distributor space which is arranged around the catalyst bed and is formed by the wall of the pressure vessel and a surrounding shell connected thereto which is provided with passage openings.

4. A process as claimed in claim 2, wherein the reaction gases leaving the catalyst bed in the case of a centripetal flow direction or the reaction gases fed into the reactor in the case of a centrifugal flow direction pass into an internal collecting tube which is arranged concentrically to the longitudinal axis, is provided with passage openings and can be filled from outside the reactor via connecting lines.

5. A process as claimed in claim 2, wherein the heat of reaction liberated is consumed by passing cold reaction gases into the reactor in accordance with the principle of cold gas quenching.

6. A process as claimed in claim 3 or 4, wherein the heat of reaction produced is consumed by passing cold reaction gases into the reactor in accordance with the principle of cold gas quenching.

7. A process as claimed in claim 2 or 3 or 4 or 5, wherein a bundle consisting of a plurality of concentrically coiled cooling tubes arranged in layers is used, it being possible for the helical direction of adjacent bundles to be changed and for the rise of the tube coil and/or the vertical and horizontal distance between adjacent tube coils to vary and to be matched to the heat-engineering requirements.

8. A process as claimed in claim 2 or 3 or 4 or 5 or 7, in which, in the case of a centripetal flow of the reaction gas mixture, the rise of the tube coils and/or the distance between adjacent tube coils is reduced in the vicinity of the outer limit of the catalyst bed.

9. A process as claimed in claim 2 or 3 or 4 or 5 or 7, in which, in the case of a centrifugal flow of the reaction gas mixture, the rise of the tube coils and/or the distance between adjacent tube coils is reduced in the vicinity of the inner limit of the catalyst bed.

10. A process as claimed in claim 2 or 3 or 4 or 5 or 6 or 7 or 8 or 9, wherein the cold reaction gas mixture is warmed by returned, heated cooling medium flowing through one or more external tube coils in the case of a centripetal flow direction and through one or more internal tube coils in the case of a centrifugal flow direction, the tube coils being disconnected from the cooling tube bundle.

11. A process as claimed in any of claims 2 to 10, wherein the reaction gas mixture used for the synthesis is circulated through the reactor, the target products and by-products of the reaction formed after passage through the reactor and any other substances which have accumulated in the circulating gas being removed from the cycle by suitable measures, and starting materials and, if desired, reaction modifiers again being fed to the gas mixture subsequently, before further passage through the reactor, by suitable measures.

12. A process as claimed in any of claims 2 to 11 for the preparation of ethylene oxide from ethylene and oxygen.

13. A process as claimed in any of claims 2 to 11 for the preparation of acrylic acid from acrolein and oxygen.

14. A process as claimed in any of claims 2 to 11 for the preparation of methacrylic acid from methacrolein and oxygen.

15. A process as claimed in any of claims 2 to 11 for the preparation of styrene by dehydration of methylphenylcarbinol.

16. A process as claimed in any of claims 2 to 11 for the preparation of methanol from synthesis gas.

17. A process as claimed in any of claims 2 to 11 for the methanization of synthesis gas.

18. A process as claimed in any of claims 2 to 11 for low-temperature conversion.

19. A process as claimed in any of claims 2 to 11 for the reaction of water with olefins to give alcohols.

20. A process as claimed in any of claims 2 to 11 for the oxychlorination of olefins or aromatics.

21. A process as claimed in any of claims 2 to 11 for the preparation of methylamines from methanol and ammonia.

## Revendications

1. Réacteur pour la réalisation de réactions en phases gazeuses catalysées par des catalyseurs hétérogènes, dans lequel on évacue la chaleur de réaction engendrée à l'aide d'un échangeur de chaleur à faisceau de tubes logé dans la garniture catalytique, qui se compose d'un ou plusieurs tubes enroulés et qui est parcouru par un milieu de refroidissement, caractérisé en ce que l'on conduit un mélange de gaz de réaction en direction radiale par rapport à l'axe longitudinal du réacteur et, de préférence, de manière centripète à travers le lit de catalyseur.

2. Procédé pour réaliser des réactions en phases gazeuse catalysées par un catalyseur hétérogène, mis en oeuvre en recourant à l'emploi d'un réacteur suivant la revendication 1.

3. Procédé suivant la revendication 2, caractérisé en ce que dans le cas d'une direction d'écoulement centripète, les gaz de réaction introduits dans le réacteur, ou, dans le cas d'une direction d'écoulement centrifuge, les gaz de réaction sortant de la garniture catalytique, parviennent dans un espace annulaire de répartition agencé autour de la garniture catalytique, lequel espace est formé par la paroi du récipient résistant à la pression et une chemise enveloppante et reliée à cette paroi, qui est pourvue d'ouvertures de passage.

4. Procédé suivant la revendication 2, caractérisé en ce que, dans le cas d'une direction d'écoulement centripète, les gaz de réaction qui sortent de la garniture catalytique, ou, dans le cas d'une direction d'écoulement centrifuge, les gaz de réaction introduits dans le réacteur, parviennent dans un tube collecteur interne, agencé concentriquement par rapport à l'axe longitudinal, lequel tube collecteur est pourvu d'ouvertures de passage et peut être abordé à partir de l'extérieur du réacteur par l'intermédiaire de conduites de raccordement.

5. Procédé suivant la revendication 2, caractérisé en ce que la chaleur de réaction libérée est consommée par l'introduction dans le réacteur de gaz de réaction froids selon le principe du refroidissement brusque à l'aide de gaz froid.

6. Procédé suivant l'une quelconque des revendications 3 et 4, caractérisé en ce que la chaleur de réaction engendrée est consommée par l'introduction dans le réacteur de gaz de réaction froids selon le principe du refroidissement brusque à l'aide de gaz froid.

7. Procédé suivant l'une quelconque des revendications 2 à 4 et 5, caractérisé en ce que l'on utilise un faisceau de plusieurs tubes de refroidissement concentriquement enroulés, qui sont agencés en rangées ou étages, où la direction de l'hélice de faisceaux voisins peut varier et la pente de l'enroulement tubulaire et/ou la distance verticale et horizontale d'enroulements tubulaires peuvent varier et être adaptées aux exigences thermotechniques.

8. Procédé suivant l'une quelconque des revendications 2 à 4, 5 et 7, caractérisé en ce que, dans le cas d'un écoulement centripète du mélange de gaz de réaction, on réduit la pente des enroulements tubulaires et/ou la distance d'enroulements tubulaires voisins à proximité de la limite externe de la garniture catalytique.

9. Procédé suivant l'une quelconque des revendications 2 à 4, 5 et 7, caractérisé en ce que, dans le cas d'un écoulement centrifuge du mélange de gaz de réaction, on réduit la pente des enroulements tubulaires et/ou la distance d'enroulements tubulaires voisins à proximité de la limite interne de la garniture catalytique.

10. Procédé suivant l'une quelconque des revendications 2 à 4 et 5 à 9, caractérisé en ce que le mélange de gaz de réaction froid est réchauffé par le milieu de refroidissement chauffé recyclé, lequel milieu, dans le cas d'une direction d'écoulement centripète, parcourt un ou plusieurs enroulements externes et, dans le cas d'une direction d'écoulement centrifuge, parcourt un ou plusieurs enroulements tubulaires internes, qui sont découplés du faisceau de tubes de refroidissement.

11. Procédé suivant l'une quelconque des revendications 2 à 10, caractérisé en ce que l'on fait circuler le mélange de gaz de réaction utilisé pour la synthèse en circuit fermé à travers le réacteur, où, après le passage à travers le réacteur, les produits intéressants engendrés et les produits secondaires de la réaction, ainsi qu'éventuellement des substances s'enrichissant à part cela dans le circuit de gaz sont évacués du circuit par des mesures appropriées et on réalimente ensuite le mélange de gaz, avant son nouveau passage à travers le réacteur, en matières de départ comme éventuellement aussi en agent modificateur de réaction, par la prise de mesures appropriées.

12. Procédé suivant l'une quelconque des revendications 2 à 11, destiné à la fabrication de l'oxyde d' éthylène à partir de l'éthylène et de l'oxygène.

13. Procédé suivant l'une quelconque des revendications 2 à 11, destiné à la fabrication de l'acide acrylique à partir de l'acroléine et de l'oxygène.

14. Procédé suivant l'une quelconque des revendications 2 à 11, destiné à la fabrication de l'acide méthacrylique à partir de la méthacroléine et de l'oxygène.

15. Procédé suivant l'une quelconque des revendications 2 à 11, pour la préparation du styrène par déshydratation du méthylphénylcarbinol.

16. Procédé suivant l'une quelconque des revendications 2 à 11, pour la préparation du méthanol à partir du gaz de synthèse.

17. Procédé suivant l'une quelconque des revendications 2 à 11, pour la méthanisation du gaz de synthèse.

18. Procédé suivant l'une quelconque des revendications 2 à 11, pour la conversion à basse température.

19. Procédé suivant l'une quelconque des revendications 2 à 11, pour la conversion de l'eau avec des oléfines en alcools.

20. Procédé suivant l'une quelconque des revendications 2 à 11, pour l'oxychloration d'oléfines ou des composés aromatiques.

21. Procédé suivant l'une quelconque des revendications 2 à 11, pour la préparation de méthylamines à partir du méthanol et de l'ammoniac.
